# EUROPEAN PATENT APPLICATION

(11) **EP 4 283 468 A1**
(43) Date of publication of application: **29.11.2023**
(21) Application number: 22766329.1
(22) Date of filing: 09.03.2022
(51) Int. Cl.: G06F 9/54, G06F 5/06, G06F 13/16

(54) **DATA TRANSMISSION SYSTEM AND RELATED DEVICE**

(30) Priority: 11.03.2021 CN 202110265887
(71) Applicant: Huawei Technologies Co., Ltd., Shenzhen, Guangdong 518129 (CN)
(72) Inventor: CHEN, Yuxiang, Shenzhen, Guangdong 518129 (CN); ZHANG, Bin, Shenzhen, Guangdong 518129 (CN); ZHOU, Luoqing, Shenzhen, Guangdong 518129 (CN)
(74) Representative: MERH-IP Matias Erny Reichl Hoffmann Patentanwälte PartG mbB
(86) International application number: PCT/CN2022/079947
(87) International publication number: WO 2022/188807

(57) **Abstract**

A data transmission system is provided, and includes an integrated processor, a first hardware device, and a first storage. The integrated processor includes a processor and a queue element that are connected through an internal bus, and the queue element is connected to the hardware device through a network. The first hardware device is configured to send, to the queue element, a first notification message indicating that there is to-be-transmitted data in the first storage. The queue element is configured to receive the first notification message and store the first notification message in a first hardware queue in the queue element. The processor is configured to obtain the first notification message from the first hardware queue, and access the to-be-transmitted data in the first storage based on the first notification message. The processor may obtain, through the internal bus, the first notification message indicating a storage location of the to-be-transmitted data in the first storage, and does not need to learn of the storage location by polling the first storage. In this way, resource consumption required by the processor to learn of the storage location is reduced, and data transmission efficiency is improved.

## Description

This application claims priority to Chinese Patent Application No. 202110265887.7, filed with the China National Intellectual Property Administration on March 11, 2021 and entitled "DATA TRANSMISSION SYSTEM AND RELATED DEVICE", which is incorporated herein by reference in its entirety.

### TECHNICAL FIELD

This application relates to the field of data transmission technologies, and in particular, to a data transmission system and a related device.

### BACKGROUND

In a conventional data transmission manner, a hardware device stores data in an input/output (input/output, I/O) cache queue in a memory, and a processor determines, through active polling, whether there is to-be-transmitted data in the input/output cache queue, to complete data transmission and processing. However, the input/output cache queue does not always have to-be-transmitted data, and therefore a case in which the processor determines, after polling, that there is no to-be-transmitted data may occur. The processor frequently queries whether there is to-be-transmitted data stored in the memory, causing heavy workloads on the processor. In addition, an access process between the processor and the memory usually depends on complex addressing and instruction processing processes and occupies a large quantity of system resources. In other words, the foregoing data transmission process may cause a waste of resources in an entire system. Therefore, how to provide a more efficient data transmission method becomes an urgent technical problem to be resolved.

### SUMMARY

This application provides a data transmission system and a related device, to improve efficiency of data transmission between a hardware device and a receiving device.

According to a first aspect, this application provides a data transmission system. The data transmission system includes an integrated processor, a first hardware device, and a first storage. In addition, the integrated processor includes a processor and a queue element. The processor is connected to the queue element through an internal bus, for example, through an FSB bus, an HT bus, or a QPI bus. The queue element is connected to the hardware device through a network, including a wired or wireless network. The first hardware device is configured to send, to the queue element, a first notification message indicating that there is to-be-transmitted data in the first storage. The queue element is configured to receive the first notification message, and store the first notification message in a first hardware queue in the queue element. The processor is configured to obtain the first notification message from the first hardware queue, and access the to-be-transmitted data in the first storage based on the first notification message.

The hardware device directly sends, to the queue element, the first notification message indicating a storage location of the to-be-transmitted data in the first storage, so that the processor may obtain the first notification message through the internal bus, that is, learn of the storage location of the to-be-transmitted data in the first storage without polling the first storage. In this way, resource consumption required by the processor to learn of the storage location can be reduced, and utilization of the processor is improved. In addition, even if a large quantity of hardware devices transmit data, because a delay of polling the queue element by a processor core in the processor through an on-chip bus is usually low, and first notification messages sent by the hardware devices may be aggregated into a same queue element, a polling delay generated by polling the queue element by a few processor cores can also meet a delay requirement of each hardware device for data transmission. Therefore, a phenomenon that a plurality of processor cores are idle when the plurality of processor cores are configured to poll the queue element can be avoided, and resource consumption of the processor core is reduced. In addition, when the plurality of hardware devices send the first notification messages to a same hardware queue in the queue element, based on a data caching feature of first input first output of the hardware queue, a receiving device may sequentially receive to-be-transmitted data sent by different hardware devices.

In a possible implementation, the integrated processor may be obtained by encapsulating the processor and the queue element into a chip. Correspondingly, the internal bus connecting the processor and the queue element is an on-chip bus on the chip.

In a possible implementation, the queue element may include a plurality of hardware queues, and when the queue element stores the first notification message, the first hardware queue in the queue element may specifically store the first notification message, where the first hardware queue may be any one of the plurality of hardware queues. In this way, when obtaining the first notification message from the queue element in a polling manner, the processor may poll only one hardware queue in the queue element, and may not need to poll the plurality of hardware queues, so that resource consumption required by the processor to obtain the first notification message can be reduced. The first hardware queue may be configured to store only a notification message sent by one hardware device, or may be configured to store notification messages respectively sent by the plurality of hardware devices.

In a possible implementation, the queue element is specifically configured to identify, in the plurality of hardware queues included in the queue element, the first hardware queue associated with the first hardware device, and store the first notification message in the first hardware queue. In this way, different hardware queues in the queue element may correspond to different hardware devices, so that a notification message sent by each hardware device may be stored in a hardware queue that is in the queue element and that corresponds to the hardware device.

In a possible implementation, the first hardware device is further configured to generate the first notification message, where the first notification message includes a location identifier and an identifier of the first hardware device. In this way, after obtaining the first notification message, the processor may determine, based on the location identifier, the storage location of the to-be-transmitted data in the first storage, and the queue element may determine, based on the identifier of the first hardware device, a hardware queue in which the first notification message is to be stored. For example, the location identifier may be, for example, an initial address of the to-be-transmitted data when the to-be-transmitted data is stored in the memory.

In a possible implementation, the queue element is specifically configured to send the first notification message to a first processor core, where the first processor core is any processor in the processor. In addition, the first processor core may be configured to obtain the first notification message from the first hardware queue, and obtain the to-be-transmitted data from the first storage based on the location identifier included in the first notification message. For example, there may be a one-to-one correspondence between the hardware queues included in the queue element and the processor cores included in the processor, so that each processor core may obtain a notification message from a hardware queue that is in the queue element and that corresponds to the processor core.

In a possible implementation, the processor may obtain the first notification message by polling the queue element through the internal bus.

In a possible implementation, the queue element may actively push the first notification message to the processor through the internal bus, so that resources that need to be consumed by the processor to obtain the first notification message can be reduced.

In a possible implementation, the hardware device is specifically configured to send the first notification message to the queue element when receiving a transmission instruction for the to-be-transmitted data.

In a possible implementation, the first storage may be specifically a main memory or a storage of another type.

In a possible implementation, a network connection between the hardware device and the queue element includes an Ethernet connection or a connection through a PCIe bus.

In a possible implementation, the data transmission system may be used in a storage array. In this case, the hardware device may be specifically a solid state drive, and the receiving device may be specifically a storage controller. Alternatively, the data transmission system may be used in a server. In this case, the hardware device may be a condensation device, a RAID controller, or the like in the server, and the receiving device is specifically hardware that includes an integrated processor in the server. Alternatively, the data transmission system may be used in a switch. In this case, the hardware device may be a device such as UE or a router that performs wireless communication with the switch, and the receiving device is specifically the switch.

In a possible implementation, when a data amount of the to-be-transmitted data is less than a preset threshold or the to-be-transmitted data belongs to data of a specific message type, the hardware device may send a second notification message including the to-be-transmitted data to the queue element, and the processor is further configured to parse the to-be-transmitted data from the second notification message.

According to a second aspect, this application further provides a data transmission method. The method may be applied to the integrated processor in any implementation of the first aspect, and the method includes: A queue element in the integrated processor receives a first notification message, where the first notification message indicates that there is to-be-transmitted data in a first storage; the queue element stores the first notification message in a first hardware queue in the queue element; the processor obtains the first notification message from the first hardware queue through an internal bus; and the processor accesses the to-be-transmitted data in the first storage based on the first notification message.

In a possible implementation, the queue element includes a plurality of hardware queues, and when storing the first notification message, specifically, the queue element may identify, in the plurality of hardware queues, the first hardware queue associated with a first hardware device, and store the first notification message in the first hardware queue.

In a possible implementation, the processor includes a plurality of processor cores, and when obtaining the first notification message from the first hardware queue, specifically, the processor may receive the first notification message sent by the queue element to a first processor core, where the first processor core is any processor core in the processor. Correspondingly, when the processor obtains the to-be-transmitted data, specifically, the first processor core may obtain the to-be-transmitted data from the first storage based on a location identifier included in the first notification message.

In a possible implementation, when obtaining the first notification message, specifically, the processor may actively poll the first hardware queue in the queue element, to obtain the first notification message stored in the first hardware queue.

According to a third aspect, this application further provides a data transmission method. The method is applied to the first hardware device in any implementation of the first aspect, and the method includes: generating a first notification message, and sending the first notification message to a queue element through a network connection between the first hardware device and the queue element, where the first notification message indicates that there is to-be-transmitted data in a first storage.

In a possible implementation, the first hardware device includes an encapsulation engine and a communication interface. When generating the first notification message, specifically, the first hardware device may generate the first notification message by using the encapsulation engine. When sending the first notification message, specifically, the first hardware device may send the first notification message to the queue element through the communication interface. The first notification message obtained through encapsulation by the encapsulation engine includes a location identifier and an identifier of the first hardware device, and the location identifier indicates a storage location of the to-be-transmitted data in the first storage.

According to a fourth aspect, this application further provides a data transmission apparatus. The data transmission apparatus includes modules configured to perform the data transmission method in the second aspect or any possible implementation of the second aspect.

According to a fifth aspect, this application further provides a data transmission apparatus. The data transmission apparatus includes modules configured to perform the data transmission method in the third aspect or any possible implementation of the third aspect.

According to a sixth aspect, this application provides a server. The server includes an integrated processor, a hardware device, and a first storage. The integrated processor and the hardware device are respectively configured to implement functions implemented by the processor and the first hardware device in the first aspect or any possible implementation of the first aspect, and the first storage is configured to store to-be-transmitted data.

In a possible implementation, the hardware device includes a condensation device or a redundant array of independent disks controller.

According to a seventh aspect, this application provides a storage array. The storage array includes an integrated processor, a hardware device, and a first storage. The processor and the hardware device are respectively configured to implement functions implemented by the processor and the first hardware device in the first aspect or any possible implementation of the first aspect, and the first storage is configured to store to-be-transmitted data.

In a possible implementation, the hardware device includes a solid state drive.

According to an eighth aspect, this application provides a switch. The switch includes an integrated processor, a hardware device, and a first storage. The processor and the hardware device are respectively configured to implement functions implemented by the processor and the first hardware device in the first aspect or any possible implementation of the first aspect, and the first storage is configured to store to-be-transmitted data.

In a possible implementation, the hardware device includes user equipment.

According to a ninth aspect, this application provides a device, including a processor and a storage. The storage is configured to store instructions. When the device runs, the processor executes the instructions stored in the storage, to enable the device to perform operation steps of the data transmission method in the second aspect or any implementation of the second aspect, or enable the device to perform operation steps of the data transmission method in the third aspect or any implementation of the third aspect. It should be noted that the storage may be integrated into the processor, or may be independent of the processor. The device may further include a bus. The processor is connected to the storage through the bus. For example, the storage may include a read-only memory and a random access memory.

According to a tenth aspect, this application provides a computer-readable storage medium. The computer-readable storage medium stores instructions. When the instructions are run on a computer, the computer is enabled to perform operation steps of the method in the second aspect and any implementation of the second aspect, or the computer is enabled to perform operation steps of the method in the third aspect and any implementation of the third aspect.

According to an eleventh aspect, this application provides a computer program product including instructions. When the computer program product runs on a computer, the computer is enabled to perform operation steps of the method in the second aspect and any implementation of the second aspect, or the computer is enabled to perform operation steps of the method in the third aspect and any implementation of the third aspect.

In this application, based on the implementations provided in the foregoing aspects, the implementations may be further combined to provide more implementations.

### BRIEF DESCRIPTION OF DRAWINGS

FIG. 1 is a schematic diagram of an architecture of a data transmission system according to this application;
FIG. 2 is a schematic diagram of an architecture of a data transmission system used in a storage array according to this application;
FIG. 3 is a schematic diagram of an architecture of a data transmission system used in a server according to this application;
FIG. 4 is a schematic diagram of an architecture of a data transmission system used in a switch according to this application;
FIG. 5 is a schematic flowchart of a data transmission method according to this application;
FIG. 6 is a schematic diagram of a data structure of an example of a notification message according to this application;
FIG. 7 is a schematic diagram of an architecture of a data transmission system in which a processor 2011 may include a plurality of processor cores according to this application;
FIG. 8 is a schematic diagram of a data structure of another example of a notification message according to this application;
FIG. 9 is a schematic diagram of a structure of a data transmission apparatus according to this application; and
FIG. 10 is a schematic diagram of a structure of another data transmission apparatus according to this application.

### DESCRIPTION OF EMBODIMENTS

The following describes the technical solutions in this application with reference to the accompanying drawings in embodiments of this application.

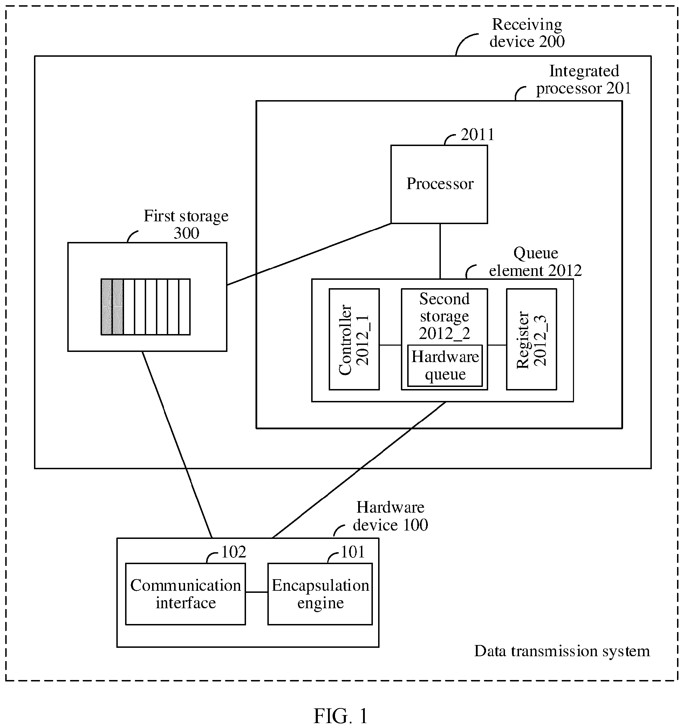

FIG. 1 is a schematic diagram of an architecture of a data transmission system according to an embodiment of this application. As shown in FIG. 1, the data transmission system includes a hardware device 100 and a receiving device 200, and the hardware device 100 may access a first storage 300 of the receiving device 200. The first storage 300 may be a component of the data transmission system. For example, the first storage 300 may be located inside the receiving device 200. For example, the first storage 300 may be a main memory (main memory). In a possible implementation, the first storage 300 may alternatively be located outside the receiving device 200, and is a component independent of the data transmission system. For example, the first storage 300 may alternatively be located in another device outside the data transmission system. In this case, the first storage 300 serves as a shared storage of the receiving device 200 and the hardware device 100. For example, the first storage 300 may be a solid state drive, and the solid state drive allows access by the receiving device 200 and the hardware device 100. For ease of explanation, the following embodiment of this application is described by using an example in which the first storage 300 is located inside the receiving device 200 and the data transmission system includes one hardware device 100.

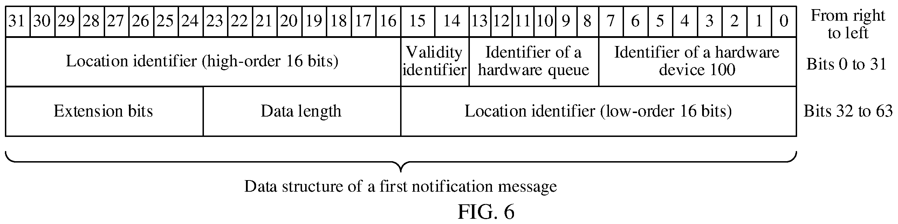

The hardware device 100 includes an encapsulation engine 101 and a communication interface 102. The encapsulation engine 101 may be hardware composed of a logic circuit. The encapsulation engine 101 is configured to encapsulate, based on a preset format, a notification message used for communication with the receiving device 200, where the preset format, such as a data structure format shown in FIG. 6, may be preset by a person skilled in the art. This is not limited in this embodiment. The communication interface 102 is configured to send the notification message obtained through encapsulation to the receiving device 200. There is a network connection between the hardware device 100 and the receiving device 200. For example, the network connection may be, for example, a wired connection, such as a wired connection through a peripheral component interconnect express (Peripheral Component Interconnect Express, PCIe) bus or an optical fiber; or may be a wireless connection, such as a wireless connection through an IB network (InfiniBand network) or Ethernet. This is not limited in this application.

The receiving device 200 includes an integrated processor 201, and the integrated processor 201 may access data in the first storage 300 by using a preconfigured driver. In this embodiment, the integrated processor 201 includes a queue element 2012 and at least one processor 2011, and the integrated processor 201 is obtained by encapsulating the processor 2012 and the queue element 2012 in an entity structure (for example, a chip). The processor 2011 is configured to access to-be-transmitted data (for example, an acknowledgment message or an end message) in the first storage 300. The processor 2011 may be a central processing unit (central processing unit, CPU), or may be a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. Alternatively, the processor may be a graphics processing unit (graphics processing unit, GPU), a neural network processing unit (neural network processing unit, NPU), a tensor processor (tensor processing unit, TPU), or an artificial intelligence (artificial intelligence) chip. It should be noted that, in FIG. 1, an example in which the integrated processor 201 includes the single processor 2011 is used for description. In another possible data transmission system, the integrated processor 201 may alternatively include a plurality of processors.

The queue element 2012 is configured to receive and store a notification message indicating a storage location of the to-be-transmitted data in the first storage 300. The notification message may indicate the processor 2011 to obtain the to-be-transmitted data from the first storage 300. The queue element 2012 includes a controller 2012_1, a second storage 2012_2, and a register 2012_3. The controller 2012_1 is configured to receive the notification message sent by the hardware device 100. The second storage 2012_2 includes at least one hardware queue, configured to write the notification message received by the controller 2012_1 into the hardware queue for storage. The register 2012_3 is configured to preconfigure a quantity of and/or queue depths of hardware queues included in the second storage 2012_2.

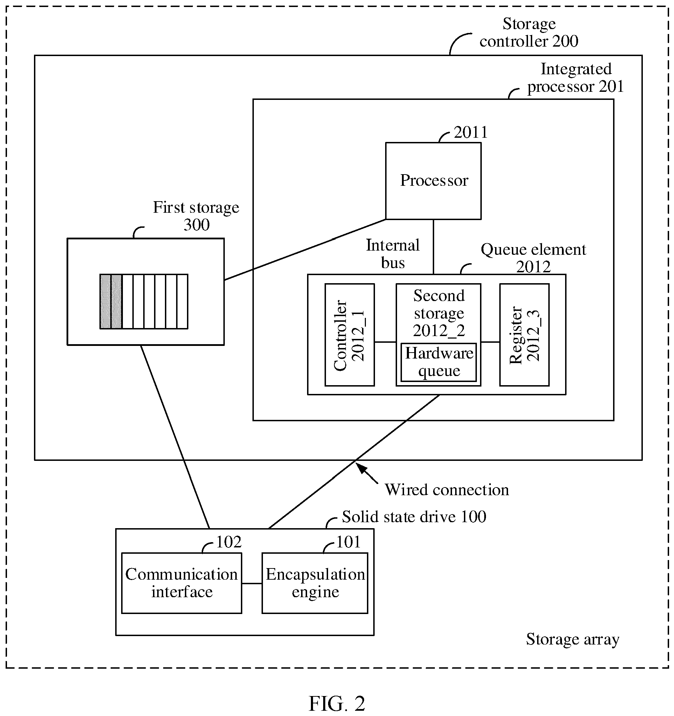

In actual application, the data transmission system shown in FIG. 1 may be used in a storage array. In this case, as shown in FIG. 2, the receiving device 200 may be specifically a storage controller 200. The storage controller 200 includes the first storage 300. The first storage 300 may be a main memory, a hard disk, or a storage of another type. The hardware device 100 may be specifically a solid state drive 100. The storage controller 200 may be wiredly connected to the solid state drive 100, for example, wiredly connected through a PCIe bus or an optical fiber. When to-be-transmitted data stored in the solid state drive 100 is read, the to-be-transmitted data may be first cached in the first storage 300, and then the processor 2011 reads the to-be-transmitted data from the first storage 300 and stores the to-be-transmitted data in a cache of the processor 2011.

In a possible embodiment, the data transmission system shown in FIG. 1 may alternatively be used in a server. In this case, the receiving device 200 shown in FIG. 1 may be specifically hardware that includes an integrated processor 201 and a first storage 300 in the server, and the hardware device 100 may be a condensation device 100 that is in a server 200 and that is configured to regulate a temperature of the server 200, or may be a redundant array of independent disks (redundant array of independent disks, RAID) controller, or the like. For example, the condensation device 100 may be wiredly connected to the hardware that includes the integrated processor 201 and the first storage 300.

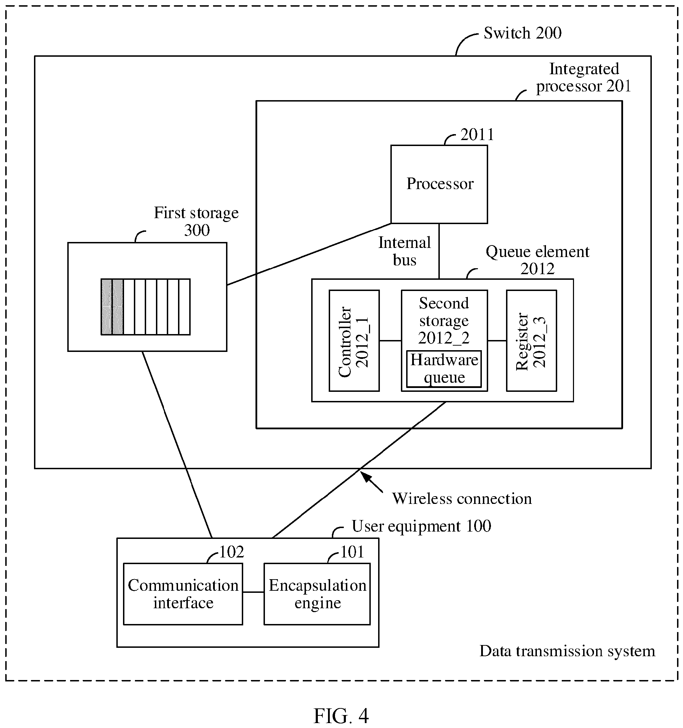

In another possible embodiment, the data transmission system shown in FIG. 1 may be further used in a network device such as a switch. In this case, as shown in FIG. 4, the receiving device 200 may be a switch 200 for forwarding data, and the hardware device 100 may be user equipment (user equipment, UE) 100 connected to the switch, a routing device/server that sends data, or the like. The device 100 and the switch 200 may communicate with each other by using a Transmission Control Protocol/Internet Protocol (Transmission Control Protocol/ Internet Protocol, TCP/IP) or the like.

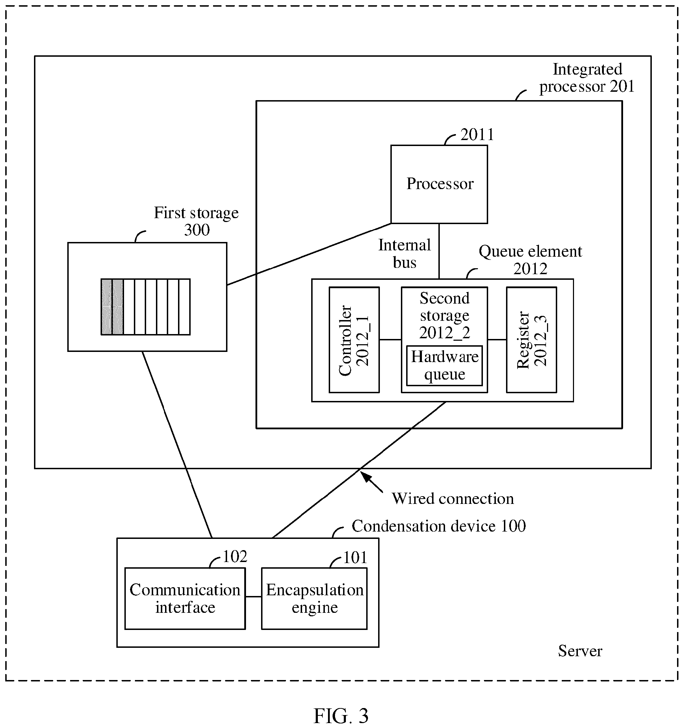

It should be noted that application scenarios shown in FIG. 2 to FIG. 4 are merely examples. An application scenario to which the data transmission system is applicable is not limited in embodiments.

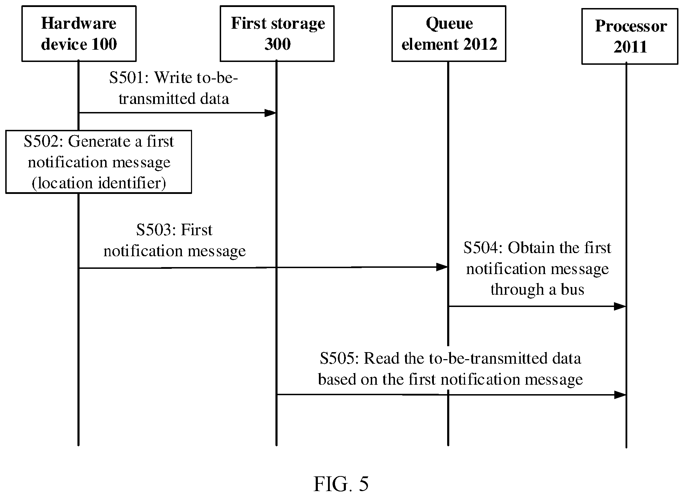

Based on the system architectures shown in FIG. 1 to FIG. 4, the following further describes, with reference to the accompanying drawings, a method provided in this application. FIG. 5 is a schematic flowchart of a data transmission method according to an embodiment of this application. For ease of description, the following uses an example in which the data transmission method is applied to the data transmission system shown in FIG. 1 to describe in detail a process of transmitting data from a hardware device 100 to a receiving device 200. It should be understood that in another embodiment, the data transmission method may alternatively be applied to another applicable data transmission system. The data transmission method shown in FIG. 5 includes the following steps.

S501: The hardware device 100 sends to-be-transmitted data to a first storage 300.

In a process of transmitting the to-be-transmitted data to the receiving device 200, the hardware device 100 may first send the to-be-transmitted data to the first storage 300 for temporary storage, so that the receiving device 200 subsequently reads the to-be-transmitted data from the first storage 300. In some examples, the to-be-transmitted data in this embodiment may be, for example, data fed back by the hardware device 100 in response to a request from the receiving device 200 in a communication process, for example, an acknowledgment (acknowledgment, ACK) message or a completion (completion) message, or may be communication data of a video, a picture, a text, or the like. This is not limited in this embodiment.

In an example, the hardware device 100 may store the to-be-transmitted data in the first storage 300 in a direct memory access (direct memory access, DMA) manner. Specifically, a DMA controller (not shown in FIG. 1) may be configured in the hardware device 100. After receiving a transmission instruction, the DMA controller may send the to-be-transmitted data to the first storage 300 through an I/O interface connected to the first storage 300, so that the first storage 300 stores the to-be-transmitted data. For example, the transmission instruction received by the DMA controller may be provided by a processor in the hardware device 100. For example, when the processor in the hardware device 100 generates new service data in a service processing process, the processor may send a transmission instruction for the new service data (that is, the to-be-transmitted data) to the DMA controller, to instruct the DMA controller to transmit the data to the first storage 300. It should be understood that, in actual application, the hardware device 100 may alternatively write the to-be-transmitted data into the first storage 300 in another possible manner, which is not limited to the DMA manner in the foregoing example.

S502: The hardware device 100 generates a first notification message, where the first notification message includes a location identifier indicating a storage location of the to-be-transmitted data in the first storage 300.

When writing the to-be-transmitted data into the first storage 300, the hardware device 100 can further determine the storage location of the to-be-transmitted data in the first storage 300. For example, the transmission instruction received by the DMA controller may carry an initial address of storage space of the to-be-transmitted data written into the first storage 300, so that the initial address in the transmission instruction may be used as the storage location of the to-be-transmitted data in the first storage 300. Alternatively, when the DMA controller writes the to-be-transmitted data into the first storage 300, the first storage 300 may feed back the storage location of the to-be-transmitted data in the first storage 300 to the DMA controller. A specific implementation of obtaining the storage location by the hardware device 100 is not limited in this embodiment.

Then, the hardware device 100 may generate the first notification message based on the determined storage location, and send the first notification message to the receiving device 200, to indicate, by using the first notification message, the receiving device 200 to read the to-be-transmitted data from the first storage 300.

In an example, the hardware device 100 may include an encapsulation engine 101, and the hardware device 100 may use the encapsulation engine 101 to generate the first notification message. The first notification message meets a requirement of a first preset format, and may include the location identifier indicating the storage location of the to-be-transmitted data in the first storage 300 and an identifier of the hardware device 100. For example, the location identifier may be, for example, an initial address of storage space of the to-be-transmitted data in the first storage 300, or an address of another type. Then, the hardware device 100 may send the first notification message obtained through encapsulation to the receiving device 200 through a communication interface 102, and specifically, may send the first notification message to a queue element 2012 in the receiving device 200 for storage. In this way, the receiving device 200 may learn of, based on the first notification message, the storage location of the to-be-transmitted data in the first storage 300 and the hardware device 100 transmitting the data. In addition, when a plurality of sending devices simultaneously send first notification messages to the queue element 2012, a plurality of different first notification messages may be aggregated in the queue element 2012, to improve efficiency of subsequently obtaining the plurality of different first notification messages by a processor 2011.

Optionally, in addition to the location identifier and the identifier of the hardware device 100, the first notification message sent by the hardware device 100 to the receiving device 200 may further include other information, such as a data length of the to-be-transmitted data and a message processing validity identifier. The message processing validity identifier may indicate validity of the first notification message. For example, the message processing validity identifier may indicate whether the first notification message is correct or incorrect, or may indicate whether the receiving device 200 needs to discard the first notification message.

Further, when the queue element 2012 of the receiving device 200 includes a plurality of hardware queues, the queue element 2012 may pre-allocate a hardware queue configured to store a message sent by each hardware device, and notify the hardware device 100 of an identifier of the hardware queue allocated to the hardware device 100. In this way, the first notification message sent by the hardware device 100 to the queue element 2012 may further include an identifier of the hardware queue configured to store the first notification message, so that the queue element 2012 stores the first notification message in the hardware queue indicated by the identifier of the hardware queue. Optionally, the first notification message may alternatively not include the identifier of the hardware queue. Correspondingly, after receiving the first notification message sent by the hardware device 100, the queue element 2012 may store, based on a pre-established correspondence between hardware devices and the hardware queues, the first notification message in the hardware queue corresponding to the hardware device 100.

For example, the first notification message obtained through encapsulation by the encapsulation engine 101 may be specifically a data structure shown in FIG. 6. A length of the notification message is 64 bits (bits), and specific bits in the 64 bits may be used to record specific information. For example, as shown in FIG. 6, data bits 0 to 7 (8 bits in total) in the first notification message indicate the identifier of the hardware device 100, data bits 8 to 13 (6 bits in total) indicate the identifier of the hardware queue that is in the queue element 2012 and that is configured to store the first notification message, and data bits 14 and 15 (2 bits in total) serve as the message processing validity identifier. For example, when a value of the 2-bit data bit is "00", it may indicate that the first notification message is correct; when a value of the 2-bit data bit is "01", it may indicate that the first notification message is incorrect; and when a value of the 2-bit data bit is "10", it may indicate the receiving device 200 to discard the first notification message. Data bits 16 to 47 (32 bits in total) indicate the location identifier of the storage location of the to-be-transmitted data in the first storage 300, where high-order 16 bits of the location identifier are bits 16 to 31, and low-order 16 bits of the location identifier are bits 32 to 47. Data bits 48 to 55 (8 bits in total) may indicate a data length of the first notification message. Remaining eight data bits (that is, bits 56 to 63) may be used as extension bits, to transmit other information, such as timestamp information, between the hardware device 100 and the receiving device 200.

It should be noted that the first notification message shown in FIG. 6 is merely an example. In another possible implementation, the first notification message in the first preset format may alternatively be in another possible format, and is not limited to the example shown in FIG. 6. For example, a quantity of data bits indicating information such as the location identifier and the identifier of the hardware device 100 may alternatively be another quantity.

S503: The hardware device 100 sends the generated first notification message to the queue element 2012 of the receiving device 200 for storage.

In this embodiment, the hardware device 100 may directly send the first notification message in a specific format to the queue element 2012 of the receiving device 200. Correspondingly, the queue element 2012 may receive the first notification message, and store the first notification message by using the hardware queue, and the processor 2011 in the receiving device 200 may not need to intervene in a process of storing the first notification message in the queue element 2012. In specific implementation, the queue element 2012 may include a controller 2012_1 and a second storage 2012_2. The second storage 2012_2 includes at least one hardware queue, the at least one hardware queue may be configured to store the first notification message sent by the hardware device 100, and only one copy of each first notification message may be stored in the queue element 2012. The controller 2012_1 is configured to receive the first notification message sent by the hardware device 100, and write the first notification message into the hardware queue in the second storage 2012_2. The hardware queue configured to store the first notification message sent by the hardware device 100 in FIG. 1 may also be referred to as a first hardware queue in this specification. Further, the queue element 2012 may further include a register 2012_3. The register 2012_3 may be configured to preconfigure a quantity of and/or queue depths of hardware queues in the queue element 2012. The queue depth is a maximum amount of data that can be stored in a queue. For example, when initializing the queue element 2012, the receiving device 200 may configure a quantity of hardware queues in the second storage 2012_2 to any integer value from 1 to 64, a depth of each hardware queue to 2 M (megabit) bits, and a data length of each storage unit to 64 bits. In actual application, the quantity of hardware queues, the depth of each hardware queue, and the storage unit may be flexibly configured. This is not limited in this embodiment.

In an example, when the second storage 2012_2 includes a plurality of hardware queues, each hardware queue may have a corresponding hardware device 100. Specifically, the controller 2012_1 in the queue element 2012 may establish correspondences between different hardware queues and different hardware devices 100. In addition, after receiving the first notification message sent by the hardware device 100, the controller 2012_1 may find, based on the identifier of the hardware device 100 carried in the first notification message and based on the pre-established correspondence, a hardware queue corresponding to the hardware device 100, so that the controller 2012_1 may write the received first notification message into the hardware queue 2012_2. Each hardware queue may correspond to one hardware device 100, to be specific, notification messages stored in the hardware queue are notification messages sent by a same hardware device 100. Alternatively, each hardware queue may correspond to a plurality of different hardware devices 100, to be specific, different notification messages sent by the plurality of different hardware devices may be stored in a same hardware queue. This is not limited in this embodiment.

In actual application, the queue element 2012 may be obtained by encapsulating the controller 2012_1, the second storage 2012_2, and the register 2012_3 into an entity structure. Further, the queue element 2012 obtained through encapsulation and the processor 2011 are encapsulated into an entity structure. For example, the queue element 2012 and the processor 2011 are encapsulated into an entity structure in a form of a chip or a card (for example, a PCIe card), to obtain an integrated processor 201. An internal bus between the processor 2011 and the queue element 2012 may be an internal communication bus of a chip, for example, may be a front side bus (front side bus, FSB), an HT (Hyper Transport, HT) bus, or a quick path interconnect (Quick Path Interconnect, QPI) bus.

S504: The processor 2011 obtains, through the internal bus, the first notification message stored in the queue element 2012.

In this embodiment, the processor 2011 may obtain, through the internal bus, the first notification message stored in the queue element 2012, to obtain the to-be-transmitted data from the first storage 300 based on the first notification message, to transmit the to-be-transmitted data from the hardware device 100 to the receiving device 200.

Specifically, the processor 2011 may obtain the first notification message in the queue element 2012 in any one of the following manners.

Manner 1: The queue element 2012 actively sends the first notification message to the processor 2011.

After determining that the first notification message is successfully written into the hardware queue 2012_2, the controller 2012_1 may actively push the first notification message to the processor 2011 through the internal bus. The controller 2012_1 may actively push the first notification message to the processor 2011 when determining that the hardware queue 2012_2 is not empty; the controller 2012_1 may actively push the first notification message to the processor 2011 when determining that an amount of data in the hardware queue 2012_2 reaches a preset data amount; or the controller 2012_1 may actively push the first notification message to the processor 2011 when a write frequency of the first notification message reaches a preset frequency value. In this embodiment, a specific implementation of triggering the controller 2012_1 to actively push the first notification message is not limited. In addition, the controller 2012_1 may directly send the first notification message to the processor 2011 in a format in which the message is originally received, to wake up the processor 2011 to process the first notification message. In this case, the format of the first notification message pushed by the hardware device 100 to the controller 2012_1 is the same as the format of the first notification message pushed by the controller 2012_1 to the processor 2011. Alternatively, the controller 2012_1 may decapsulate the first notification message, re-encapsulate, in a second preset format, information (such as the location identifier and the identifier of the hardware device 100) obtained through decapsulation, and then send a second notification message that is in the second preset format and that is obtained through re-encapsulation to the processor 2011. The second notification message in the second preset format may also indicate the storage location of the to-be-transmitted data in the first storage 300. In this case, a format of the second notification message pushed by the hardware device 100 to the controller 2012_1 may be different from the format of the first notification message pushed by the controller 2012_1 to the processor 2011. In this way, active push of the queue element 2012 can enable the processor 2011 to obtain the notification message without consuming a resource. This reduces impact of obtaining the notification message by the processor 2011 on processing service data by the processor 2011, and can also avoid a resource waste caused by initiating an interrupt by the hardware device 100 to the processor 2011 (to trigger the receiving device 200 to receive data).

Manner 2: The processor 2011 actively queries whether there is the first notification message in the queue element 2012.

The processor 2011 may periodically send a query instruction to the queue element 2012, to query whether the queue element 2012 stores the first notification message. When the queue element 2012 stores the first notification message, the controller 2012_1 in the queue element 2012 may respond to the query instruction, and feed back the stored first notification message to the processor 2011. When the queue element 2012 does not store the first notification message, the controller 2012_1 may not respond, or give the processor 2011 a feedback that the first notification message is not stored.

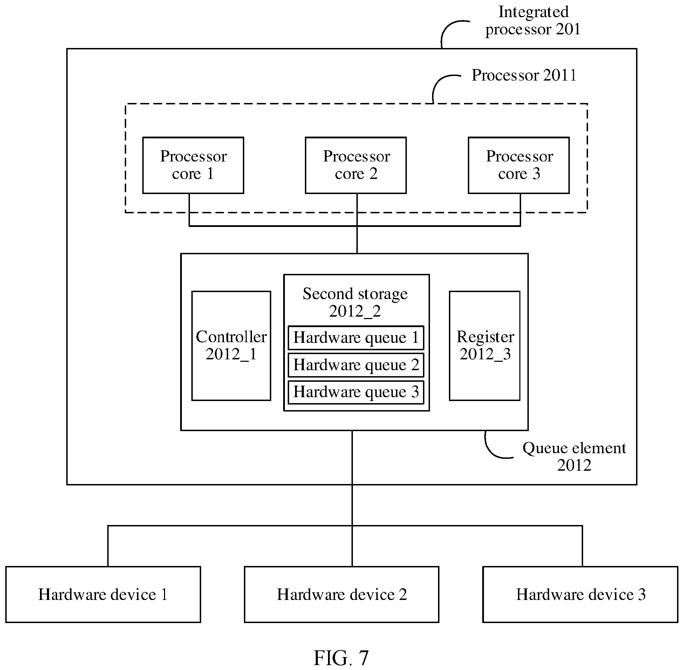

Further, when the data transmission system shown in FIG. 1 includes a plurality of hardware devices, the second storage 2012_2 includes a plurality of hardware queues, and the processor 2011 includes a plurality of processor cores, as shown in FIG. 7, different processor cores in the processor 2011 may be configured to be responsible for data communication between the receiving device 200 and different hardware devices 100. Based on this, in a possible implementation, the processor 2011 may further establish correspondences between the plurality of processor cores and the hardware queues by using the queue element 2012. For example, a processor core 1 may correspond to a hardware queue 1, a processor core 2 may correspond to a hardware queue 2, and a processor core 3 may correspond to a hardware queue 3. In this way, different processor cores in the processor 2011 may periodically poll the corresponding hardware queues, and read the first notification message from the hardware queue when the hardware queue stores the first notification message, so that the processor core obtains the to-be-transmitted data from the first storage 300 based on the read first notification message. In this way, when there are a plurality of different hardware devices (for example, a hardware device 1 to a hardware device 3 in FIG. 7) transmitting data to the receiving device 200 in parallel, different processor cores may obtain corresponding first notification messages from corresponding hardware queues, and obtain, from the first storage 300 based on the corresponding first notification messages, data transmitted by different sending devices, so that the receiving device 200 communicates with the plurality of different hardware devices in parallel, and data receiving efficiency of the receiving device 200 is improved.

The processor 2011 may include the plurality of processor cores, and a speed at which the processor 2011 may poll the queue element 2012 through the internal bus is usually high. Therefore, some processor cores in the processor 2011 may be configured to perform work of polling the queue element 2012. For example, a dedicated single processor core in the plurality of processor cores included in the processor 2011 may be configured to be responsible for polling the queue element 2012, or based on workloads of the processor cores, one or more processor cores with low workloads at a current moment are selected to be responsible for polling whether a notification message or the like exists in the second storage 2012_2 of the queue element 2012. In this way, when the queue element 2012 is polled, few processor resources are consumed, so that resource consumption of the processor 2011 can be reduced, and utilization of the processor 2011 is improved. In addition, even if a large quantity of hardware devices 100 transmit data to the receiving device 200, because a delay of polling the queue element 2012 by the processor core through an on-chip bus is usually relatively low (usually lower than a delay of accessing the first storage 300 by the processor core through a storage bus), and the first notification messages sent by the hardware devices 100 may be aggregated into the same queue element 2012, a polling delay generated when a few processor cores poll the queue element 2012 can also meet a requirement of each hardware device for a data transmission delay in a data transmission process. Therefore, a phenomenon that a plurality of processor cores are idle when the plurality of processor cores poll the queue element 2012 can be avoided, thereby reducing resource consumption of the processor cores. In addition, when the plurality of hardware devices 100 send the first notification messages to a same hardware queue in the queue element 2012, based on a data caching feature of first input first output (first input first output, FIFO) of the hardware queue in the second storage 2012_2, the receiving device 200 may sequentially receive the to-be-transmitted data sent by different hardware devices 100.

For example, whether a communication policy between the processor 2011 and the queue element 2012 is a manner in which the processor 2011 actively polls the queue element 2012 or a manner in which the queue element 2012 actively pushes the first notification message to the processor 2011 may be configured by the controller 2012_1 in the queue element 2012. For example, the processor 2011 may obtain the first notification message from the queue element 2012 in an active polling manner by default. In this case, the controller 2012_1 may respond to an active polling process of the processor 2011 and provide the stored first notification message to the processor 2011. When the controller 2012_1 is configured to actively push the first notification message to the processor 2011, the controller 2012_1 may indicate the processor 2011 to change a default active polling communication policy to a passive receiving communication policy, and after receiving the first notification message sent by the hardware device 100, the controller 2012_1 may actively push the first notification message to the processor 2011.

After obtaining the first notification message, the processor 2011 may access the first storage 300 based on the first notification message, to obtain the to-be-transmitted data. In an implementation example, the processor 2011 may parse the location identifier included in the first notification message, and determine the storage location of the to-be-transmitted data in the first storage 300 based on the location identifier, so that the processor 2011 may read, from the first storage 300, the to-be-transmitted data corresponding to the storage location. For example, when the location identifier is specifically an initial address of the to-be-transmitted data when the to-be-transmitted data is stored in the first storage 300, the processor 2011 may determine, based on the initial address, a start location for data reading, and then invoke, based on a length of the to-be-transmitted data parsed from the first notification message, a corresponding driver to read data of the length from the start location, to obtain the to-be-transmitted data. In this way, the to-be-transmitted data is transmitted from the hardware device 100 to the receiving device 200.

In some possible application scenarios, an application program further runs on the receiving device 200. After obtaining the to-be-transmitted data from the first storage 300, the processor 2011 may provide the to-be-transmitted data to the application program, so that the application program performs a corresponding service operation based on the to-be-transmitted data, for example, presents a human-machine interaction result such as an image or a table corresponding to the to-be-transmitted data to a user.

In a possible embodiment, in some scenarios of actual application, a data volume of the to-be-transmitted data transmitted by the hardware device 100 to the receiving device 200 may be small. For example, the to-be-transmitted data may be a completion message, an acknowledgment message, or the like, and the data volume of the to-be-transmitted data may not exceed 16 bits. Based on this, when transmitting the to-be-transmitted data to the receiving device 200, the hardware device 100 may directly transmit the to-be-transmitted data via the first notification message to the queue element, so that the processor 2011 directly obtains the to-be-transmitted data from the queue element.

During specific implementation, when determining that the to-be-transmitted data meets a preset condition, the hardware device 100 may generate, by using the encapsulation engine 101, a second notification message including the to-be-transmitted data, where the second notification message includes the to-be-transmitted data. The hardware device 100 may write the second notification message into the queue element 2012 through the communication interface 102, so that the processor 2011 obtains the second notification message in a manner in which the processor 2011 actively polls the queue element 2012 or the queue element 2012 actively pushes the second notification message to the processor 2011. In this way, the processor 2011 may parse the to-be-transmitted data from the second notification message, to transmit the to-be-transmitted data from the hardware device 100 to the receiving device 200. In this way, the hardware device 100 does not need to write the to-be-transmitted data into the first storage 300, and the processor 2011 does not need to read the to-be-transmitted data from the first storage 300 either. Therefore, efficiency of obtaining the to-be-transmitted data by the receiving device 200 can be effectively improved, thereby reducing resource consumption. The preset condition that the to-be-transmitted data meets includes: A data amount of the to-be-transmitted data is less than a preset threshold, or the to-be-transmitted data belongs to a specific type of message, such as the completion message or the acknowledgment message. In actual application, the preset condition may alternatively be another condition. This is not limited in this embodiment.

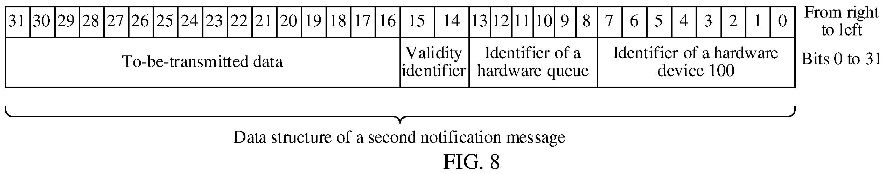

In an example, the second notification message generated by the hardware device 100 by using the encapsulation engine 101 may be in a format shown in FIG. 8. As shown in FIG. 8, a data amount of the second notification message includes 32 bits. Bits 0 to 7 (8 bits in total) may indicate the identifier of the hardware device 100. Bits 8 to 13 (6 bits in total) indicate an identifier of a hardware queue configured to store the second notification message sent by the hardware device 100. Bits 14 and 15 (2 bits in total) are used as a message processing validity identifier. The processor 2011 may determine, based on the message processing validity identifier, data in specific data bits in the second notification message as to-be-transmitted data, and does not need to obtain the to-be-transmitted data by accessing the first storage 300. For example, when a value of the 2-bit data bit is "11 ", the processor 2011 may determine to obtain the to-be-transmitted data by parsing the second notification message, and when a value of the 2-bit data bit is not "11", the processor 2011 may obtain the to-be-transmitted data by accessing the first storage 300. Bits 16 to 31 (16 bits in total) may be used to store the to-be-transmitted data. It should be understood that, in another embodiment, the first notification message including the to-be-transmitted data may alternatively be a message in another format. For example, a data amount of the first notification message is 64 bits. The format of the first notification message shown in FIG. 8 is merely an example, and is not limited in this embodiment.

In this embodiment, in a process in which the hardware device 100 transmits data to the receiving device 200, because the hardware device 100 directly sends, to the queue element 2012 in the receiving device 200, the first notification message indicating the storage location of the to-be-transmitted data in the first storage 300, the processor 2011 in the hardware device 100 may obtain the first notification message from the hardware queue of the queue element 2012 through the internal bus, to learn of the storage location of the to-be-transmitted data in the first storage 300 without polling the first storage 300. In this way, resource consumption required by the processor 2011 to learn of the storage location can be reduced, and utilization of the processor 2011 is improved. In addition, even if a large quantity of hardware devices 100 transmit data to the receiving device 200, because a delay of polling the queue element 2012 by the processor core in the processor 2011 through the on-chip bus is usually relatively low, and the first notification messages sent by the hardware devices 100 may be aggregated into the same queue element 2012, a polling delay generated when a few processor cores poll the queue element 2012 can also meet a requirement of each hardware device for a data transmission delay in a data transmission process. Therefore, a phenomenon that a plurality of processor cores are idle when the receiving device 200 polls the queue element 2012 by using the plurality of processor cores can be avoided, thereby reducing resource consumption of the processor cores. In addition, when there are the plurality of hardware devices 100 sending the first notification messages to a same hardware queue in the queue element 2012, based on a data caching feature of first input first output of the hardware queue, the receiving device 200 may sequentially receive the to-be-transmitted data sent by different hardware devices 100.

When the queue element 2012 includes a plurality of hardware queues, each hardware queue may be configured to store notification messages sent by one or more hardware devices 100, and different hardware queues correspond to different hardware devices 100. In this way, notification messages sent by different hardware devices 100 may be respectively stored in different hardware queues, so that the processor may obtain the notification messages of the different hardware devices 100 from the different hardware queues.

Further, the hardware queues in the queue element 2012 may correspond to the processor cores included in the processor. For example, the processor core may be bound to the hardware queue in advance according to a policy such as load balancing, so that when obtaining a notification message, the processor core may obtain the notification message only from the hardware queue bound to the processor core, without polling another processor core, to reduce resource consumption of obtaining the notification message by the processor core. Alternatively, when actively sending a notification message, that is, the notification message stored in the hardware queue, to the processor, the queue element may send the notification message to the processor core bound to the hardware queue, so that the processor core does not need to obtain the notification message from another processor core.

It should be noted that another appropriate step combination that can be figured out by a person skilled in the art based on the content described above also falls within the protection scope of this application. In addition, a person skilled in the art should also appreciate that all embodiments described in this specification are example embodiments, and the related actions are not necessarily mandatory to this application.

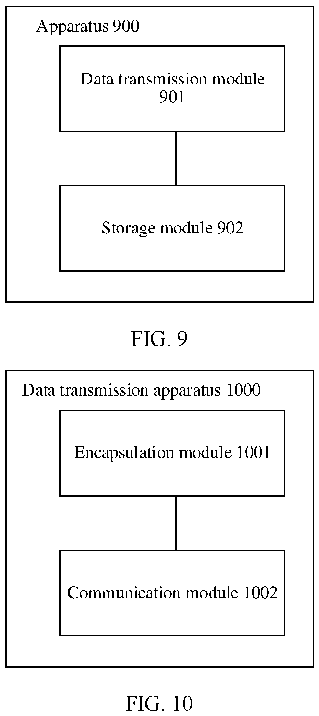

The foregoing describes in detail the data transmission system and the data transmission method provided in this application with reference to FIG. 1 to FIG. 8. The following describes a data transmission apparatus provided in this application with reference to FIG. 9 to FIG. 10.

FIG. 9 is a schematic diagram of a structure of a data transmission apparatus 900 according to this application. The apparatus 900 is used in the integrated processor 201 (or the receiving device 200) in FIG. 1. The apparatus 900 may include:
a data transmission module 901, configured to receive a first notification message, where the first notification message indicates that there is to-be-transmitted data in a first storage; and
a storage module 902, configured to store the first notification message in a first hardware queue in a queue element, where
the data transmission module 901 is further configured to send the first notification message in the first hardware queue to a processor through an internal bus between the queue element and the processor, so that the processor accesses the to-be-transmitted data in the first storage based on the first notification message.

Optionally, the queue element includes a plurality of hardware queues, and the storage module 902 is specifically configured to identify, in the plurality of hardware queues, the first hardware queue associated with a first hardware device, and store the first notification message in the first hardware queue.

Optionally, the processor includes a plurality of processor cores, and the data transmission module 901 is specifically configured to send the first notification message to a first processor core, where the first processor core is any processor core in the processor, the first notification message includes a location identifier, and the location identifier indicates the to-be-transmitted data in the first storage.

It should be understood that the apparatus 900 in this embodiment of this application may be implemented by using a central processing unit (CPU), may be implemented by using an application-specific integrated circuit (ASIC), or may be implemented by using a programmable logic device (programmable logic device, PLD). The PLD may be a complex programmable logic device (complex programmable logic device, CPLD), a field-programmable gate array (FPGA), a generic array logic (generic array logic, GAL), or any combination thereof. Alternatively, each module in the apparatus 900 may be a software module.

The apparatus 900 may transmit the first notification message to the processor through the internal bus, so that the processor learns of a storage location of the to-be-transmitted data in the first storage without polling the first storage. In this way, resource consumption required by the processor to learn of the storage location can be reduced, and utilization of the processor and efficiency of data transmission between a hardware device and a receiving device are improved. In addition, even if a large quantity of hardware devices transmit data, a polling delay generated by polling the queue element by a few processor cores in the processor can also meet a requirement of each hardware device for a data transmission delay in a data transmission process. Therefore, a phenomenon that a plurality of processor cores are idle when the receiving device uses the plurality of processor cores to poll the queue element can be avoided, and resource consumption of the processor core is reduced. In addition, when there are a plurality of hardware devices sending first notification messages to a same hardware queue in the queue element, based on a data caching feature of first input first output of the hardware queue, the receiving device may sequentially receive to-be-transmitted data sent by different hardware devices.

The data transmission apparatus 900 according to this embodiment of this application may correspond to the operation steps of the method that is described in embodiments of this application and that is performed by the receiving device as an execution body. In addition, the foregoing and other operations and/or functions of the modules of the data transmission apparatus 900 are respectively used to implement corresponding procedures of the operation steps performed by the receiving device in the method in FIG. 5. For brevity, details are not described herein again.

FIG. 10 is a schematic diagram of a structure of another data transmission apparatus 1000 according to this application. The apparatus 1000 is used in the hardware device 100 in FIG. 1. The apparatus 1000 may include:
an encapsulation module 1001, configured to generate a first notification message; and
a communication module 1002, configured to send the first notification message to a queue element through a network connection between a first hardware device and the queue element, where the first notification message indicates that there is to-be-transmitted data in a first storage.

Optionally, the encapsulation module 1001 is specifically configured to generate the first notification message by using an encapsulation engine.

The communication module 1002 is specifically configured to send the first notification message to the queue element through a communication interface, where the first notification message obtained through encapsulation by the encapsulation engine includes a location identifier and an identifier of the first hardware device, and the location identifier indicates a storage location of the to-be-transmitted data in the first storage.

It should be understood that the apparatus 1000 in this embodiment of this application may be implemented by using a central processing unit (CPU), may be implemented by using an application-specific integrated circuit (ASIC), or may be implemented by using a programmable logic device (PLD). The PLD may be a complex programmable logic device (CPLD), a field-programmable gate array (FPGA), a generic array logic (GAL), or any combination thereof. Alternatively, each module in the apparatus 1000 may be a software module.

The data transmission apparatus 1000 according to this embodiment of this application may correspond to the method described in embodiments of this application. In addition, the foregoing and other operations and/or functions of the modules of the data transmission apparatus 1000 are respectively used to implement corresponding procedures of the method performed by the hardware device 100 in the method in FIG. 5. For brevity, details are not described herein again.

In addition, this application further provides a device. The device includes a processor and a storage. Optionally, the device further includes a bus, and the processor and the storage in the device are connected through the bus. The storage stores program code, and the processor may invoke the program code stored in the storage to perform the following operations:
receiving a first notification message, where the first notification message indicates that there is to-be-transmitted data in a first storage;
storing the first notification message in a first hardware queue in a queue element;
obtaining the first notification message from the first hardware queue through the internal bus; and
accessing the to-be-transmitted data in the first storage based on the first notification message.

Alternatively, the processor may invoke the program code stored in the storage to perform the following operations:
generating a first notification message; and
sending the first notification message to a queue element through a network connection between a first hardware device and the queue element, where the first notification message indicates that there is to-be-transmitted data in a first storage.

It should be understood that, in this embodiment of this application, the processor may be a CPU, or may be another general-purpose processor, a digital signal processor (DSP), an application-specific integrated circuit (ASIC), a field-programmable gate array (FPGA) or another programmable logic device, a discrete gate or transistor logic device, a discrete device component, or the like. The general-purpose processor may be a microprocessor or any conventional processor.

The storage may include a read-only memory and a random access memory, and provide instructions and data to the processor. The storage may further include a nonvolatile random access memory. For example, the storage may further store information about a device type.

The storage may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The data transmission apparatus 1000 according to this embodiment of this application may correspond to the operation steps of the method that is described in embodiments of this application and that is performed by the hardware device as an execution body. In addition, the foregoing and other operations and/or functions of the modules of the apparatus 1000 are respectively used to implement corresponding procedures of the operation steps performed by the hardware device in the method in FIG. 5. For brevity, details are not described herein again.

All or some of the foregoing embodiments may be implemented by using software, hardware, firmware, or any combination thereof. When the software is used to implement embodiments, all or some of the embodiments may be implemented in a form of a computer program product. The computer program product includes one or more computer instructions. When the computer program instructions are loaded or executed on a computer, all or some of the procedures or the functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A data transmission system, wherein the data transmission system comprises an integrated processor, a first hardware device, and a first storage, the integrated processor comprises a processor and a queue element, the processor is connected to the queue element through an internal bus, and the queue element is connected to the hardware device through a network;
the first hardware device is configured to send a first notification message to the queue element, wherein the first notification message indicates that there is to-be-transmitted data in the first storage;
the queue element is configured to receive the first notification message and store the first notification message in a first hardware queue in the queue element; and
the processor is configured to obtain the first notification message from the first hardware queue, and access the to-be-transmitted data in the first storage based on the first notification message.

2. The system according to claim 1, wherein the integrated processor is obtained by encapsulating the processor and the queue element into a chip.

3. The system according to claim 1 or 2, wherein the queue element comprises a plurality of hardware queues, the first hardware queue is any one of the plurality of hardware queues, and the first hardware queue is configured to store a notification message of the first hardware device.

4. The system according to any one of claims 1 to 3, wherein
the queue element is specifically configured to identify, in the plurality of hardware queues comprised in the queue element, the first hardware queue associated with the first hardware device, and store the first notification message in the first hardware queue.

5. The system according to any one of claims 1 to 4, wherein
the first hardware device is further configured to generate the first notification message, wherein the first notification message comprises a location identifier and an identifier of the first hardware device, and the location identifier indicates a storage location of the to-be-transmitted data in the first storage.

6. The system according to any one of claims 1 to 5, wherein
the queue element is specifically configured to send the first notification message to a first processor core, wherein the first processor core is any processor core in the processor; and
the first processor core is configured to obtain the first notification message from the first hardware queue, and obtain the to-be-transmitted data from the first storage based on the location identifier comprised in the first notification message.

7. The system according to any one of claims 1 to 6, wherein the first storage comprises a main memory.

8. The system according to any one of claims 1 to 7, wherein the network comprises Ethernet or peripheral component interconnect express.

9. The system according to any one of claims 1 to 8, wherein the data transmission system is used in any one of a storage array, a server, or a switch.

10. A server, wherein the server comprises an integrated processor, a hardware device, and a first storage, the integrated processor and the hardware device are respectively configured to implement functions implemented by the processor and the first hardware device in the system according to any one of claims 1 to 9, and the first storage is configured to store to-be-transmitted data.

11. The server according to claim 10, wherein the hardware device comprises a condensation device or a redundant array of independent disks controller.

12. A storage array, wherein the storage array comprises an integrated processor, a hardware device, and a first storage, the processor and the hardware device are respectively configured to implement functions implemented by the processor and the first hardware device in the system according to any one of claims 1 to 9, and the first storage is configured to store to-be-transmitted data.

13. The storage array according to claim 12, wherein the hardware device comprises a solid state drive.

14. A switch, wherein the switch comprises an integrated processor, a hardware device, and a first storage, the processor and the hardware device are respectively configured to implement functions implemented by the processor and the first hardware device in the system according to any one of claims 1 to 9, and the first storage is configured to store to-be-transmitted data.

15. The switch according to claim 14, wherein the hardware device comprises user equipment.
